(19) Europäisches Patentamt
European Patent Office
Office européen des brevets

(11) **EP 2 746 804 B1**

(12) **EUROPEAN PATENT SPECIFICATION**

(45) Date of publication and mention
of the grant of the patent:
**06.01.2016 Bulletin 2016/01**

(51) Int Cl.:
*G01S 13/90* *(2006.01)*    *G01S 13/00* *(2006.01)*

(21) Application number: **14164878.2**

(22) Date of filing: **16.04.2014**

(54) **Method, device, and system for compensating synchronization error**

Verfahren, Gerät und System zur Kompensation eines Synchronisationsfehlers

Procédé, dispositif et système de compensation d'erreur de synchronisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2014 CN 201410004082**

(43) Date of publication of application:
**25.06.2014 Bulletin 2014/26**

(73) Proprietor: **Institute of Electronics, Chinese
Academy of
Sciences
Beijing 100190 (CN)**

(72) Inventors:
 • **Wang, Yu
   Beijing 100190 (CN)**
 • **Deng, Yunkai
   Beijing 100190 (CN)**
 • **Jin, Richu
   Beijing 100190 (CN)**
 • **Shao, Yunfeng
   Beijing 100190 (CN)**
 • **Zhang, Zhimin
   Beijing 100190 (CN)**
 • **Wang, Chunle
   Beijing 100190 (CN)**

(74) Representative: **Gulde & Partner
Patent- und Rechtsanwaltskanzlei mbB
Wallstraße 58/59
10179 Berlin (DE)**

(56) References cited:
**US-A1- 2006 202 885**

 • QILEI ZHANG ET AL: "An integrative synchronization and imaging approach for bistatic spaceborne/stratospheric SAR with a fixed receiver", EURASIP JOURNAL ON ADVANCES IN SIGNAL PROCESSING, vol. 2013, no. 65, 1 November 2013 (2013-11-01), pages 1-16, XP055124730, DOI: 10.1186/1687-6180-2013-165
 • SUI MING ET AL: "Time synchronization based on the direct signal for spaceborne/airborne hybrid bistatic SAR", 2013 IEEE RADAR CONFERENCE (RADARCON13), IEEE, 29 April 2013 (2013-04-29), pages 1-4, XP032479698, ISSN: 1097-5659, DOI: 10.1109/RADAR. 2013.6586022 ISBN: 978-1-4673-5792-0 [retrieved on 2013-08-23]
 • GE XIANJUN ET AL: "Cross-correlation detection and time difference estimation in non-cooperative bistatic radar systems", SIGNAL PROCESSING (ICSP), 2010 IEEE 10TH INTERNATIONAL CONFERENCE ON, IEEE, PISCATAWAY, NJ, USA, 24 October 2010 (2010-10-24), pages 2261-2265, XP031816006, ISBN: 978-1-4244-5897-4
 • W.Q. WANG ET AL: "Time and phase synchronisation via direct-path signal for bistatic synthetic aperture radar systems", IET RADAR, SONAR & NAVIGATION, vol. 2, no. 1, 1 February 2008 (2008-02-01), pages 1-11, XP055124899, ISSN: 1751-8784, DOI: 10.1049/iet-rsn:20060097
 • NORLAND R: "Digital signal processing in binary phase coded CW multistatic radar", RADAR CONFERENCE, 2003. PROCEEDINGS OF THE INTERNATIONAL ADELAIDE, SA, AUSTRALIA 3-5 SEPT. 2003, PISCATAWAY, NJ, USA,IEEE, US, 3 September 2003 (2003-09-03), pages 299-302, XP010688721, DOI: 10.1109/RADAR. 2003.1278756 ISBN: 978-0-7803-7870-4

## Description

### TECHNICAL FIELD

The disclosure relates to the field of radar communication and signal processing technology, and in particular to a method, device, and system for compensating a synchronization error.

### BACKGROUND

A Synthetic Aperture Radar (SAR) synthesizes a small aperture of a real antenna into a large aperture of an equivalent antenna by way of data processing using a relative motion of the radar with respect to a target. The SAR is featured by its capability to generate a high-resolution image, work around the clock in any kind of weather, and effectively identify a disguise and penetrate a cover.

A bistatic SAR system includes a transmitter, and may include two or more receivers deployed in different directions dedicated to capturing echo signals in directions other than an incidence direction. A technical challenge in the bistatic SAR system lies in synchronization between the transmitter and any of the receivers as well as instant data exchange. Compared with a conventional monostatic SAR system, the bistatic SAR system is superior in secrecy, resistance to interference, capability of front-view imaging, an improved system signal-to-noise ratio, capability of interference measurement, and the like. An important mode of the bistatic SAR system is a one-stationary mode, in which the transmitter is fixed while a receiver may move freely, or a receiver is fixed while the transmitter may move freely. The one-stationary mode is easy to build, hides well, and is therefore widely applied.

Compensation for a synchronization error is a key step in imaging processing of the bistatic SAR system, wherein the synchronization error mainly refers to a frequency synchronization error and a time synchronization error. As different crystal oscillators are used in the transmitter and a receiver of the bistatic SAR system, large errors in frequency and time will be generated over time.

A current method for compensating a synchronization error in the bistatic SAR system is as follows: two channels are adopted at a receiver, wherein the first channel is used to receive an echo signal, the second channel is used to directly receive a direct signal transmitted by a transmitter, and then the frequency synchronization error and the time synchronization error are compensated using the direct signal. In implementing the disclosure, the inventor finds that the existing method has at least the following disadvantages:

In an existing bistatic SAR system in a one-stationary mode, with for example a fixed transmitter and a moving receiver, it is basically impossible to ensure that the moving receiver can receive in each azimuthal direction a direct signal sent by the transmitter, which leads to difficulty in compensating the frequency synchronization error and the time synchronization error. Thus, application of a method for compensating a synchronization error in the existing bistatic SAR system is limited.

In short, there is a pressing need for a method and system for compensating a synchronization error in a bistatic SAR system in a one-stationary mode, capable of compensating a synchronization error when only a direct signal in a preset azimuthal direction is obtained.

Qilei Zhang et al.: "An integrative synchronization and imaging approach for bistatic spaceborne/stratospheric SAR with a fixed receiver" (EURASIP Journal on Advances in Signal Processing, vol. 2013, no. 65, 1 November 2013, pages 1-16) discloses a Bistatic spaceborne/stratospheric synthetic aperture radar (SAR) with a fixed receiver as a novel hybrid bistatic SAR system, in which a spaceborne SAR serves as the transmitter of opportunity, while a fixed receiver is mounted on a stratospheric platform. This paper presents an integrative synchronization and imaging approach for this particular system. Firstly, a novel synchronization method using the direct-path signal, which can be collected by a dedicated antenna, is proposed and applied. The synchronization error can be completely removed using the proposed method. However, as the cost of synchronization, the characteristic of synchronized echo's range history becomes quite different from that of general bistatic SAR data. To focus this particular synchronized data, its 2-D spectrum is derived under linear approximations and then a frequency-domain imaging algorithm using two-dimensional inverse scaled Fourier transform (2-DISFT) is proposed. At last, the proposed integrative synchronization and imaging algorithm is verified by simulations.

Ming Sui et al.: "Time synchronization based on the direct signal for spaceborne/airborne hybrid bistatic SAR" (2013 IEEE Radar Conference, 29 April 2013, pages 1-4) discloses a Spaceborne/airborne hybrid bistatic SAR(SABSAR) with a special structure, its time synchronization system produces a great effect on the subsequent imaging processing. In view of the receiver, the impact of time synchronization errors is discussed in this paper, a time synchronization approach based on the direct signal is proposed. In this scenario, in order to compensate for time synchronization error in echo signal, it is necessary to extract the Doppler centroid from the direct signal timely. A novel method, which has small amount of computation, is put forward to estimate the Doppler centroid of the direct signal.

## SUMMARY

In view of the above, embodiments of the disclosure provide a method, device, and system for compensating a synchronization error, capable of compensating a synchronization error as well as improving system robustness.

Accordingly, a technical solution of the disclosure is implemented as follows.

An embodiment of the disclosure provides a method for compensating a synchronization error in a bistatic Synthetic Aperture Radar (SAR) system with a fixed transmitter and a moving receiver, including steps of:

receiving an echo signal in a first channel, and receiving, in a preset azimuthal direction in a second channel, a direct signal directly sent by a transmitter;

performing range compression of the echo signal via the direct signal, and compensating a frequency synchronization error; and

extracting a range-time trajectory according to the range-compressed echo signal, and compensating a time synchronization error according to the range-time trajectory,

wherein, the step of performing range compression of the echo signal via the direct signal, and compensating a frequency synchronization error may include steps of:

transforming the echo signal to a frequency domain through a Fast Fourier Transform (FFT), and transforming the direct signal to the frequency domain through the FFT;

performing conjugate multiplication of the FFT-transformed echo signal and the FFT-transformed direct signal to obtain a product; and

transforming the product back to a time domain through an inverse FFT (IFFT) to perform the range compression of the echo signal and compensate the frequency synchronization error,

wherein, the step of compensating a time synchronization error according to the range-time trajectory may include steps of:

performing polynomial fitting on the range-time trajectory;

determining a rough estimate of the time synchronization error through an iterative search according to a fitted range-time polynomial and a theoretical range-time polynomial;

searching a set range centering on the rough estimate for a time synchronization error minimizing an entropy of a focused image, and taking the time synchronization error minimizing the entropy of the focused image as an accurate estimate of the time synchronization error; and

compensating the time synchronization error according to the echo signal and the accurate estimate,

wherein, the compensating the time synchronization error according to the echo signal and the accurate estimate may include steps of:

transforming the echo signal to a range-frequency domain through a Fast Fourier Transform (FFT);

calculating a product of the FFT-transformed echo signal by a compensation function of the accurate estimate; and

transforming the product to a time domain through an inverse FFT (IFFT) to compensate the time synchronization error.

In an embodiment, the step of extracting a range-time trajectory according to the range-compressed echo signal may include:

detecting, with a Constant False Alarm Rate (CFAR) detector, a strong scattering point in the range-compressed echo signal, and extracting, with a line tracker, the range-time trajectory.

According to the method, an embodiment of the disclosure provides a moving receiver device in a bistatic Synthetic Aperture Radar (SAR) system including a receiving module, a frequency-synchronization-error compensating module, an extracting module, and a time-synchronization-error compensating module, wherein
the receiving module is configured to receive an echo signal in a first channel and receive, in a preset azimuthal direction in a second channel, a direct signal directly sent by a transmitter;
the frequency-synchronization-error compensating module is configured to perform range compression of the echo signal via the direct signal and compensate a frequency synchronization error;
the extracting module is configured to extract a range-time trajectory according to the range-compressed echo signal; and
the time-synchronization-error compensating module is configured to compensate a time synchronization error according to the range-time trajectory,
wherein, the frequency-synchronization-error compensating module may be specifically configured to:

transform the echo signal to a frequency domain through a Fast Fourier Transform (FFT);
transform the direct signal to the frequency domain through the FFT;
perform conjugate multiplication of the FFT-transformed echo signal and the FFT-transformed direct signal to obtain a product; and
transform the product back to a time domain through an inverse FFT (IFFT) to perform the range compression of the echo signal and compensate the frequency synchronization error,

wherein, the time-synchronization-error compensating module may specifically be configured to:

perform polynomial fitting on the range-time trajectory;

determine a rough estimate of the time synchronization error through an iterative search according to a fitted range-time polynomial and a theoretical range-time polynomial;

search a set range centering on the rough estimate for a time synchronization error minimizing an entropy of a focused image, and take the time synchronization error minimizing the entropy of the focused image as an accurate estimate of the time synchronization error; and

compensate the time synchronization error according to the echo signal and the accurate estimate,

wherein, the time-synchronization-error compensating module may specifically be configured to:

transform the echo signal to a range-frequency domain through a Fast Fourier Transform (FFT);

calculate, on the range-frequency domain, a product of the FFT-transformed echo signal by a compensation function of the accurate estimate; and

transform the product to a time domain through an inverse FFT (IFFT) to compensate the time synchronization error.

In an embodiment, the extracting module may specifically be configured to:

detect a strong scattering point in the range-compressed echo signal with a Constant False Alarm Rate (CFAR) detector; and

extract the range-time trajectory with a line tracker.

According to the method, an embodiment of the disclosure further provides a bistatic Synthetic Aperture Radar (SAR) system including a fixed transmitter device and a moving receiver device as discussed above, wherein
the transmitter device is configured to transmit a signal toward a target area and transmit a direct signal toward the receiver device.

In embodiments herein, a receiver device samples a direct signal only in a preset azimuthal direction, and a frequency synchronization error is compensated according to the direct signal; meanwhile, a range-time trajectory is extracted according to a range-compressed echo signal, and the time synchronization error is compensated according to the range-time trajectory. Thus, compared with an existing method for compensating a synchronization error in a bistatic SAR system, the disclosure is capable of compensating a synchronization error when only a direct signal in a preset azimuthal direction is obtained, thereby improving system robustness.

**BRIEF DESCRIPTION OF THE DRAWINGS**

Fig. 1 is a flowchart of a method for compensating a synchronization error according to an embodiment of the disclosure;

Fig. 2 is a schematic diagram of a geometrical relationship in a bistatic SAR system according to an embodiment of the disclosure;

Fig. 3 is a schematic diagram illustrating a cause of a synchronization error according to an embodiment of the disclosure;

Fig. 4 is a schematic diagram illustrating a result of an iterative search for a rough estimate of a time synchronization error according to an embodiment of the disclosure;

Fig. 5 is a schematic diagram illustrating a result of a search for an accurate estimate of a time synchronization error according to an embodiment of the disclosure;

Fig. 6a is a schematic diagram showing a resulting image when no synchronization error compensation is performed for scene 1 according to an Embodiment 1 of the disclosure;

Fig. 6b is a schematic diagram showing a resulting image after synchronization error compensation is performed for scene 1 according to the Embodiment 1 of the disclosure;

Fig. 7a is a schematic diagram showing a resulting image when no synchronization error compensation is performed for scene 2 according to the Embodiment 1 of the disclosure;

Fig. 7b is a schematic diagram showing a resulting image after synchronization error compensation is performed for scene 2 according to the Embodiment 1 of the disclosure;

Fig. 8 is a schematic diagram of a structure of a receiver device according to an embodiment of the disclosure; and

Fig. 9 is a schematic diagram of a structure of a bistatic SAR system according to an embodiment of the disclosure.

**DETAILED DESCRIPTION**

Embodiments of the disclosure apply to a bistatic SAR system in a one-stationary mode, and mainly involve a transmitter device and a receiver device in the system, where the system includes only one transmitter device, and may include multiple receiver devices; the transmitter device may be deployed at a position different from that a receiver device is located at.

Based on the aforementioned system architecture, compensation of a synchronization signal in the bistatic SAR system according to an embodiment of the disclosure is specifically implemented as follows.

A transmitter device directly sends a receiver device a direct signal in a set azimuthal direction, and sends a target a signal, which forms an echo signal by scattering after reaching a target point;

the receiver device first receives signals in two channels, that is, receives the echo signal in a first channel and receives in a second channel the direct signal in a preset azimuthal direction sent by the transmitter device, performs range compression of the echo signal according to the direct signal, compensates a frequency synchronization error, extracts a range-time trajectory according to the range-compressed echo signal, and compensates a time synchronization error according to the range-time trajectory.

In a bistatic SAR system in the one-stationary mode, it is difficult to ensure that a direct signal can be received by sampling in each azimuthal direction during movement of a receiver device. Therefore, in an embodiment herein, a receiver device samples a direct signal only in a preset azimuthal direction, and a frequency synchronization error is compensated according to the direct signal; as the direct signal is sampled only in the preset azimuthal direction, a time synchronization error cannot be compensated according to the direct signal. Therefore, in an embodiment of the disclosure, a time synchronization error is compensated by: extracting a range-time trajectory according to a range-compressed echo signal, and compensating the time synchronization error according to the range-time trajectory.

An embodiment of the disclosure is illustrated below with reference to accompanying drawings.

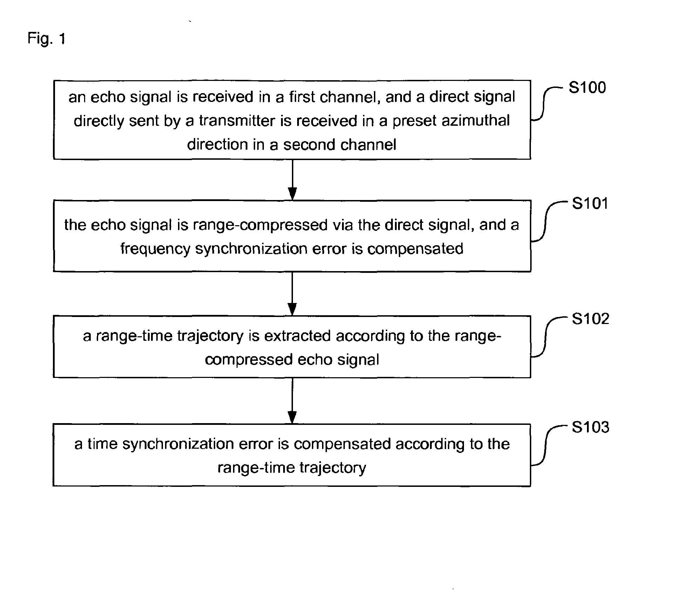

As shown in Fig. 1, a flow of a method for compensating a synchronization error provided herein specifically includes steps as follows.

S100: an echo signal is received in a first channel, and a direct signal directly sent by a transmitter is received in a preset azimuthal direction in a second channel.

Here, a signal sent by a transmitter device to a target area forms the echo signal after being scattered by the target area; and the direct signal is a signal directly sent by the transmitter device to a receiver device without being scattered by the target area.

S101: the echo signal is range-compressed via the direct signal, and a frequency synchronization error is compensated.

Specifically, the echo signal is first transformed to a frequency domain through a Fast Fourier Transform (FFT), and the direct signal is transformed to the frequency domain through the FFT.

Then, conjugate multiplication of the FFT-transformed echo signal and the FFT-transformed direct signal is performed to obtain a product.

Finally, the product is transformed back to a time domain through an Inverse FFT (IFFT) to perform range compression of the echo signal and compensate the frequency synchronization error.

Here, the echo signal may be range-compressed by range pulse compression to form a scattered point signal for subsequent extraction of a range-time trajectory.

Here, a range direction is a direction along the echo signal, while a direction along an orbit is referred to as an azimuthal direction.

S102: a range-time trajectory is extracted according to the range-compressed echo signal.

Here, the echo signal in form of a pulse signal is range-compressed into a point signal, a strong scattering point in the range-compressed echo signal is detected with a Constant False Alarm Rate (CFAR) detector, and the range-time trajectory is extracted with a line tracker.

S103: a time synchronization error is compensated according to the range-time trajectory.

Here, polynomial fitting on the range-time trajectory is performed first, and then a rough estimate of the time synchronization error is determined through an iterative search according to a fitted range-time polynomial and a theoretical range-time polynomial.

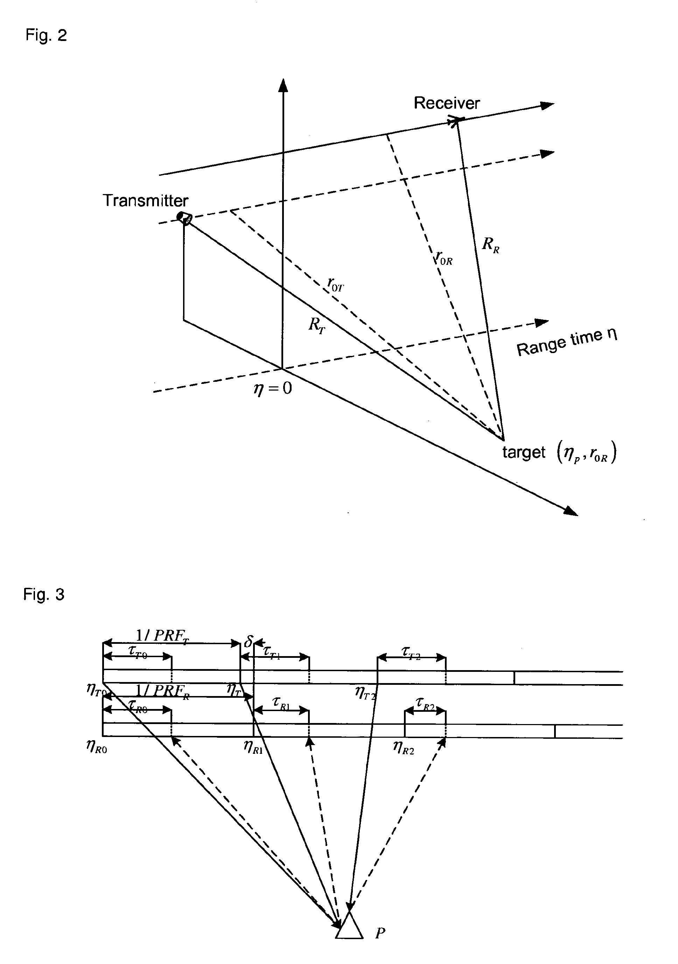

To describe embodiments of the disclosure more clearly, the process of determining a rough estimate of the time synchronization error according to the range-time trajectory is described below with an example of a geometric model in a bistatic SAR system shown in Fig. 2.

Adopted in the system is a one-stationary mode, wherein it is set that a transmitter device is fixed while a receiver device may move freely. There is no specific limit to the geometric model in the bistatic SAR system in embodiments described herein. $r_{0T}$ represents a nearest distance between a target area and an orbit of the transmitter device, $r_{0R}$ represents a nearest distance between the target area and an orbit of the receiver device, $v_R$ represents an equivalent velocity of the receiver device, $\eta$ represents azimuth time of the receiver device, and a slant range $R_T$ from the target area to the transmitter device and a slant range $R_R$ from the target region to the receiver device may be expressed as

$$R_T = \sqrt{r_{0T}{}^2 + v_R{}^2 \eta_P{}^2} \dots\dots\dots\dots\dots\dots\dots\dots\dots\dots\dots[1]$$

$$R_R(\eta) = \sqrt{r_{0R}{}^2 + v_R{}^2 (\eta - \eta_P)^2} \dots\dots\dots\dots\dots\dots\dots\dots[2]$$

here, range time is obtained via a formula (3):

$$\tau = \frac{R_T + R_R(\eta)}{c} \dots\dots\dots\dots\dots\dots\dots\dots\dots\dots[3]$$

the cause of a time synchronization error is as shown in Fig. 3, wherein $PRF_T$ represents a Pulse Repetition Frequency of a transmitter device, $PRF_R$ represents a Pulse Repetition Frequency of a receiver device, a starting point of an ith Pulse Repetition Interval of the transmitter device may be denoted by $\eta_{Ti}$ and a starting point of an ith Pulse Repetition Interval of the receiver device may be denoted by $\eta_{Ri}$, thereby

$$\eta_{Ti} = \frac{i}{PRF_T} ; i = 0,1,2,\cdots \quad \dots\dots\dots\dots\dots\dots\dots\dots\dots [4]$$

$$\eta_{Ri} = \frac{i}{PRF_R} ; i = 0,1,2,\cdots \quad \dots\dots\dots\dots\dots\dots\dots\dots [5]$$

$$\tau_{Ti} = \frac{R_T + R_R(\eta_{Ti})}{c} , i = 0,1,2,\cdots \quad \dots\dots\dots\dots\dots\dots\dots [6]$$

$$\tau_{Ri} = \frac{R_T + R_R(\eta_{Ri})}{c} , i = 0,1,2,\cdots \quad \dots\dots\dots\dots\dots [7]$$

Referring to Fig. 3, a value of the time synchronization error ($\tau_{Ti} - \tau_{Ri}$) may be obtained as

$$\tau_{Ti} - \tau_{Ri} = \eta_{Ri} - \eta_{Ti} = i \cdot \delta, i = 0,1,2,\cdots \quad \dots\dots\dots\dots\dots\dots [8]$$

wherein $\delta = \frac{1}{PRF_R} - \frac{1}{PRF_T}$ , and theoretical range time may be obtained using formulas (1), (4) and (5):

$$\tau_{Ti} = \frac{R_T + \sqrt{r_{0R}{}^2 + v_R{}^2\left(i/PRF_T + i\cdot\delta - \eta_p\right)^2}}{c} + i\cdot\delta \quad \cdots\cdots\cdots\cdots\cdots\cdots [9]$$

Polynomial approximation of formula (6) gives

$$\tau_{Ti} = A\cdot i^2 + B\cdot i + C, i = 0,1,2,\cdots$$

$$A = \frac{v_R{}^2}{2r_{0R}c}\left(\frac{1}{PRF_T} + \delta\right)^2$$

$$B = \delta - \frac{v_R{}^2}{r_{0R}c}\left(\frac{1}{PRF_T} + \delta\right)\eta_p \qquad \dots\dots\dots\dots\dots\dots [10]$$

$$C = \frac{v_R{}^2}{2r_{0R}c}\eta_p{}^2 + \frac{R_T + r_{0R}}{c}$$

Thus, making $\eta_p = 0$ by displacement gives a coefficient B of a linear item, $B = \delta$. polynomial fitting of the range-time trajectory gives a range-time polynomial: $\tau = A\cdot i^2 + B\cdot i + C, i = 0,1,2,\dots$, in which coefficients A, B and C of range time $\tau$ are known. Based on the known coefficient B, $\delta 0$ may be calculated using formula (10), such that the value of the time synchronization error can be calculated through formula (8), which is an iterative search that ends when it is determined that the difference between the time synchronization error and a theoretical time synchronization error is smaller than a threshold $\varepsilon$, that is, when $|i\cdot\delta 0 - i\cdot\delta| \leq \varepsilon$.

As there is noise interference in actually measured data, the time synchronization error estimated in this step is just a rough estimate, and a further accurate estimate is required.

Then, a set range centering on the rough estimate is searched for a time synchronization error minimizing an entropy of a focused image, which is taken as an accurate estimate of the time synchronization error.

Specifically, the set range centering on the rough estimate is searched for the accurate estimate of the time synchronization error, and a final search result is selected as the time synchronization error minimizing the entropy of the focused image, wherein the entropy of the image represents an average number of bits of a set of grayscales of the image represented by $H(P) = -\sum_{i,j}^{N} P(i,j) \ln P(i,j)$, in a unit of bit/pixel, and the entropy stands for average amount of information in an image information source.

Finally, the time synchronization error is compensated according to the echo signal and the accurate estimate of the synchronization error.

Specifically, first, the echo signal is transformed to a frequency domain in range direction through an FFT; then, a product of the FFT-transformed echo signal by a compensation function of the accurate estimate is calculated in the frequency domain in range direction; finally, the product is transformed to a time domain through an IFFT to compensate the time synchronization error.

In an embodiment of the disclosure, an echo signal is received in a first channel, and a direct signal directly sent by a transmitter is received in a preset azimuthal direction in a second channel; the echo signal is range-compressed via the direct signal, and a frequency synchronization error is compensated; a range-time trajectory is extracted according to the range-compressed echo signal; and a time synchronization error is compensated according to the range-time trajectory. In embodiments described herein, a direct signal is sampled only in a preset azimuthal direction, and a frequency synchronization error is compensated according to the direct signal; as the direct signal is sampled only in the preset azimuthal direction, and a time synchronization error cannot be compensated according to the direct signal, thus in an embodiment of the disclosure, the range-time trajectory is extracted according to the range-compressed echo signal, and the time synchronization error is compensated according to the range-time trajectory. Thus, compared with an existing method for compensating a synchronization error in a bistatic SAR system, the disclosure is capable of compensating a synchronization error with only a direct signal obtained in a preset azimuthal direction, thereby improving system robustness.

To describe embodiments of the disclosure more clearly, a technical solution of the disclosure is further elaborated with reference to specific embodiments.

Embodiment 1: in the bistatic SAR system in a one-stationary mode, a transmitter device is fixed on a mountain with a height of 94m, a receiver device is fixed on a carrier aircraft moving at a uniform equivalent velocity of 99m/s. Parameters in the system are as shown in Table 1.

Table 1

|  | Receiver | Transmitter |
|---|---|---|
| Carrier frequency | 9.65 GHz | |
| Range-direction bandwidth | 380 MHz | |
| Range-direction sampling rate | 400 MHz | |
| Pulse duration | 5 μs | |
| Pulse Repetition Frequency | 1250 GHz | 1300 GHz |
| equivalent velocity | 99 m/s | 0 |
| Height | 2825.3 m | 94 m |
| Depression angle | 25° | 5° |
| Beam width | 6° | 27° |
| Composite exposure time | 6.10s | |

In specific implementation, the receiver device receives an echo signal in a first channel and receives, in a preset azimuthal direction in a second channel, a direct signal directly sent by the transmitter;

First, the echo signal is transformed to a frequency domain through an FFT, and the direct signal is transformed to the frequency domain through the FFT; conjugate multiplication of the FFT-transformed echo signal and the FFT-transformed direct signal is performed to obtain a product; and the product is transformed back to a time domain through an IFFT to perform range compression of the echo signal and compensate the frequency synchronization error.

Then, the echo signal in form of a pulse signal is range-compressed into a point signal, a strong scattering point in the range-compressed echo signal is detected with a CFAR detector, and the range-time trajectory is extracted with a line tracker.

Finally, polynomial fitting on the range-time trajectory is performed, and then a rough estimate of the time synchronization error is determined through an iterative search according to a fitted range-time polynomial and a theoretical range-time polynomial.

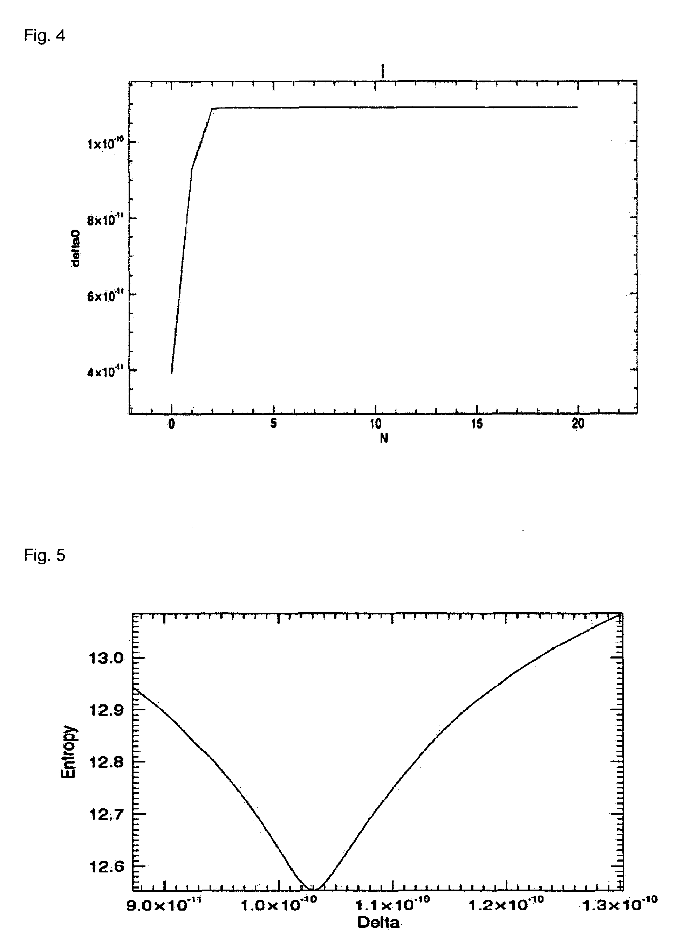

Fig. 4 is a schematic diagram showing a result $\delta 0$ obtained after a number of iterations N during an iterative search for a rough estimate of a time synchronization error according to an embodiment of the disclosure. The iterative search ends when the difference between the time synchronization error and a theoretical time synchronization error is smaller than a threshold $\varepsilon$, that is, when $|i\cdot\delta 0 - i\cdot\delta| \le \varepsilon$. It can be seen from Fig. 4 that actually measured data converge with the iteration for the rough estimate of the time synchronization error, proving the feasibility of the iterative search.

A set range $[0.9\times10^{-10}\ 1.3\times10^{-10}]$ centering on the rough estimate $1.1\times10^{-10}$ as shown in Fig.4 is searched for a time synchronization error $1.03\times10^{-10}$ minimizing an Entropy $H(\mathrm{P}) = -\sum_{i,j}^{N} P(\mathrm{i},\mathrm{j}) \ln P(\mathrm{i},\mathrm{j})$ of a focused image, and then the time synchronization error $1.03\times10^{-10}$ is taken as an accurate estimate of the time synchronization error. As can be seen in Fig.5, the Entropy is unimodal with respect to the time synchronization error, proving the feasibility of the iterative search.

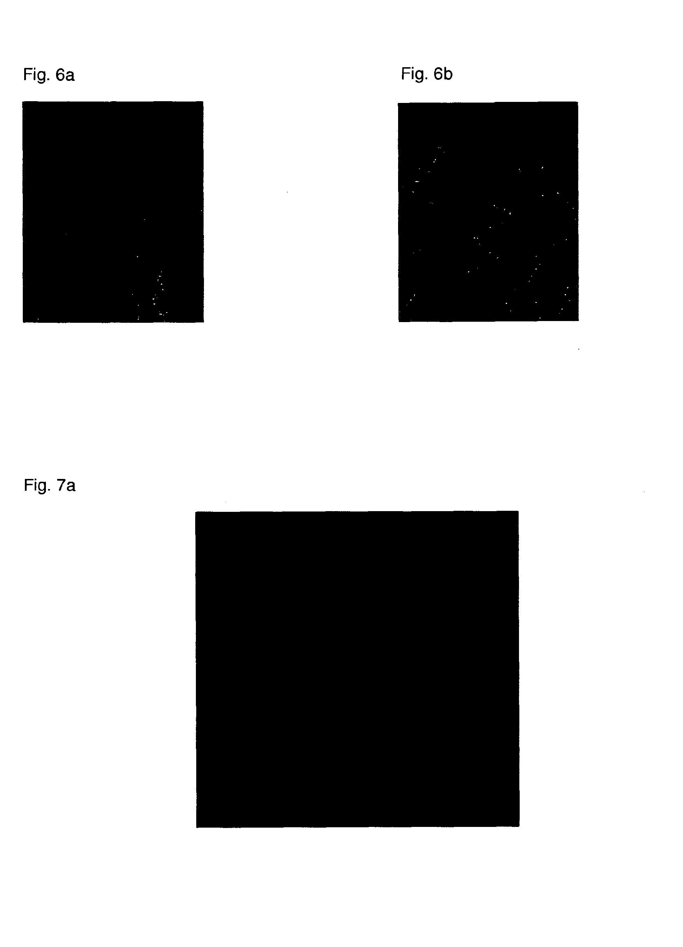

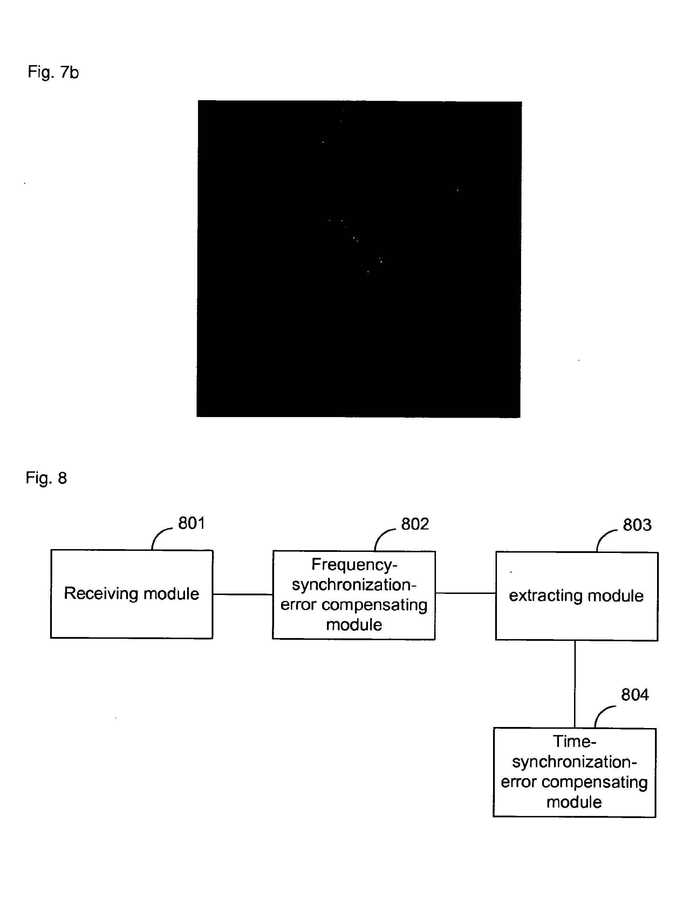

Fig. 6a is a schematic diagram showing a resulting image when no synchronization error compensation is performed for scene 1, Fig. 6b is a schematic diagram showing a resulting image after synchronization error compensation is performed for scene 1; Fig. 7a is a schematic diagram showing a resulting image when no synchronization error compensation is performed for scene 2, and Fig. 7b is a schematic diagram showing a resulting image after synchronization error compensation is performed for scene 2. It can be seen by comparison that the method for compensating a synchronization error provided herein gives better imaging results and strengthened system robustness.

Based on the same technical concept, the disclosure further provides a receiver device and a bistatic SAR system, which address the problem in similar ways based on similar principles. Thus, one can refer to implementation of the method for implementation of the device which is not repeated.

As shown in Fig. 8, the receiver device provided herein includes a receiving module 801, a frequency-synchronization-error compensating module 802, an extracting module 803 and a time-synchronization-error compensating module 804, wherein

the receiving module 801 is configured to receive an echo signal in a first channel and receive, in a preset azimuthal direction in a second channel, a direct signal directly sent by a transmitter;

the frequency-synchronization-error compensating module 802 is configured to perform range compression of the echo signal via the direct signal and compensate a frequency synchronization error;

the extracting module 803 is configured to extract a range-time trajectory according to the range-compressed echo signal; and

the time-synchronization-error compensating module 804 is configured to compensate a time synchronization error according to the range-time trajectory.

The aforementioned functional-module division is merely given according to an embodiment of the disclosure. Functional-module division does not limit the disclosure.

In specific implementation, the frequency-synchronization-error compensating module 802 is specifically configured to:

transform the echo signal to a frequency domain through an FFT;

transform the direct signal to the frequency domain through the FFT;

perform a conjugate multiplication of the FFT-transformed echo signal and the FFT-transformed direct signal to obtain a product; and

transform the product back to a time domain through an IFFT to perform the range compression of the echo signal and compensate a frequency synchronization error.

In specific implementation, the extracting module 803 is specifically configured to:

detect a strong scattering point in the range-compressed echo signal with a CFAR detector; and

extract the range-time trajectory with a line tracker.

In specific implementation, the time-synchronization-error compensating module 804 is specifically configured to:

perform polynomial fitting on the range-time trajectory;

determine a rough estimate of the time synchronization error through an iterative search according to a fitted range-time polynomial and a theoretical range-time polynomial;

search a set range centering on the rough estimate for a time synchronization error minimizing an entropy of a focused image, and take the time synchronization error minimizing the entropy of the focused image as an accurate estimate of the time synchronization error; and

compensate the time synchronization error according to the echo signal and the accurate estimate.

In specific implementation, the time-synchronization-error compensating module 804 is specifically configured to:

transform the echo signal to a range-frequency domain through an FFT;

calculate, on the range-frequency domain, a product of the FFT-transformed echo signal by a compensation function of the accurate estimate; and

transform the product to a time domain through an IFFT to compensate the time synchronization error.

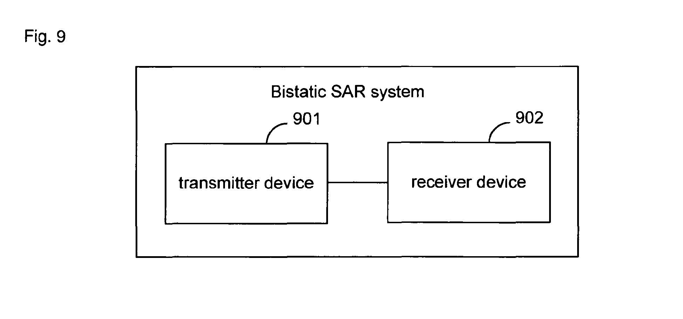

As shown in Fig. 9, a bistatic SAR system provided herein includes: a transmitter deice 901 and a receiver device 902, wherein
the transmitter device 901 is configured to transmit a signal toward a target area and transmit a direct signal toward the receiver device; and
the receiver device 802 is configured to: receive an echo signal in a first channel and receive, in a preset azimuthal direction in a second channel, the direct signal directly sent by the transmitter; perform range compression of the echo signal via the direct signal and compensate a frequency synchronization error; extract a range-time trajectory according to the range-compressed echo signal; and compensate a time synchronization error according to the range-time trajectory.

In an actual application, the receiving module 801, the frequency-synchronization-error compensating module 802, the extracting module 803 and the time-synchronization-error compensating module 804 may be implemented by a Central Processing Unit (CPU), a Microprocessor Unit (MPU), a Digital Signal Processor (DSP) or a Field Programmable Gate Array (FPGA) located at the receiver device.

The disclosure is illustrated with reference to a flowchart and/or a block diagram of a method, device (system) and computer program product described herein. Note that each flow in the flowchart and/or each block in the block diagram, as well as combination of flows and/or blocks thereof, may be implemented by computer program instructions. These computer program instructions may be offered to a processor of a general-purpose computer, a special purpose computer, an embedded processor or another programmable data processing device, such that instructions executed by the processor of a computer or another programmable data processing device generate an equipment for implementing the function specified in one or more flows of the flowchart and/or one or more blocks in the block diagram.

These computer program instructions may also be stored in a computer-readable memory capable of guiding a computer or another programmable data processing device to work in a given way, such that the instructions stored in the computer-readable memory generate a product including an instruction equipment for implementing the function specified in one or more flows of the flowchart and/or one or more blocks in the block diagram.

These computer program instructions may also be loaded to a computer or another programmable data processing device, such that the instructions executed on the computer or the programmable data processing device provide step(s) for implementing the function specified in one or more flows of the flowchart and/or one or more blocks in the block diagram.

## Claims

1.    A method for compensating a synchronization error in a bistatic Synthetic Aperture Radar, SAR, system with a fixed transmitter and a moving receiver, comprising steps of:

receiving (S100) an echo signal in a first channel, and receiving, in a preset azimuthal direction in a second channel, a direct signal directly sent by a transmitter;

performing (S101) range compression of the echo signal via the direct signal, and compensating a frequency synchronization error; and

extracting (S102) a range-time trajectory according to the range-compressed echo signal, and compensating (S103) a time synchronization error according to the range-time trajectory,

wherein the step of performing (S101) range compression of the echo signal via the direct signal, and compensating a frequency synchronization error comprises:

transforming the echo signal to a frequency domain through a Fast Fourier Transform, FFT, and transforming the direct signal to the frequency domain through the FFT;

performing conjugate multiplication of the FFT-transformed echo signal and the FFT-transformed direct signal to obtain a product; and

transforming the product back to a time domain through an inverse FFT, IFFT, to perform the range compression of the echo signal and compensate the frequency synchronization error,

**characterized in that** the step of compensating (S103) a time synchronization error according to the range-time trajectory comprises:

performing polynomial fitting on the range-time trajectory;

determining a rough estimate of the time synchronization error through an iterative search according to a fitted range-time polynomial and a theoretical range-time polynomial;

searching a set range centering on the rough estimate for a time synchronization error minimizing an entropy of a focused image, and taking the time synchronization error minimizing the entropy of the focused image as an accurate estimate of the time synchronization error; and

compensating the time synchronization error according to the echo signal and the accurate estimate, and the compensating the time synchronization error according to the echo signal and the accurate estimate comprises:

transforming the echo signal to a range-frequency domain through an FFT;

calculating a product of the FFT-transformed echo signal by a compensation function of the accurate estimate; and

transforming the product to a time domain through an IFFT to compensate the time synchronization error.

2. The method according to claim 1, wherein the step of extracting (S102) a range-time trajectory according to the range-compressed echo signal comprises:

detecting, with a Constant False Alarm Rate, CFAR, detector, a strong scattering point in the range-compressed echo signal, and extracting, with a line tracker, the range-time trajectory.

3. A moving receiver device in a bistatic Synthetic Aperture Radar, SAR, system, comprising a receiving module (801), a frequency-synchronization-error compensating module (802), an extracting module (803), and a time-synchronization-error compensating module (804), wherein

the receiving module (801) is configured to receive an echo signal in a first channel and receive, in a preset azimuthal direction in a second channel, a direct signal directly sent by a transmitter;

the frequency-synchronization-error (802) compensating module is configured to perform range compression of the echo signal via the direct signal and compensate a frequency synchronization error;

the extracting module (803) is configured to extract a range-time trajectory according to the range-compressed echo signal; and

the time-synchronization-error compensating module (804) is configured to compensate a time synchronization error according to the range-time trajectory,

wherein the frequency-synchronization-error compensating module (802) is configured to:

transform the echo signal to a frequency domain through a Fast Fourier Transform ,FFT;

transform the direct signal to the frequency domain through the FFT;

perform conjugate multiplication of the FFT-transformed echo signal and the FFT-transformed direct signal to obtain a product; and

transform the product back to a time domain through an inverse FFT, I FFT, to perform the range compression of the echo signal and compensate the frequency synchronization error,

**characterized in that** the time-synchronization-error compensating module (804) is configured to:

perform polynomial fitting on the range-time trajectory;
determine a rough estimate of the time synchronization error through an iterative search according to a fitted range-time polynomial and a theoretical range-time polynomial;
search a set range centering on the rough estimate for a time synchronization error minimizing an entropy of a focused image, and take the time synchronization error minimizing the entropy of the focused image as an accurate estimate of the time synchronization error; and
compensate the time synchronization error according to the echo signal and the accurate estimate, and

the time-synchronization-error compensating module (804) is configured to:

transform the echo signal to a range-frequency domain through an FFT;
calculate, on the range-frequency domain, a product of the FFT-transformed echo signal by a compensation function of the accurate estimate; and
transform the product to a time domain through an IFFT to compensate the time synchronization error.

4. The device according to claim 3, wherein the extracting module (803) is configured to:

detect a strong scattering point in the range-compressed echo signal with a Constant False Alarm Rate (CFAR) detector; and
extract the range-time trajectory with a line tracker.

5. A bistatic Synthetic Aperture Radar (SAR) system, comprising a fixed transmitter device (901) and a moving receiver device (902) according to any one of claims 3 and 4, wherein
the transmitter device (901) is configured to transmit a signal toward a target area and transmit a direct signal toward the receiver device.


**Patentansprüche**

1. Verfahren zur Kompensation eines Synchronisationsfehlers in einem System eines bistatischen Radars mit synthetischer Apertur, SAR, mit einem feststehenden Sender und einem bewegten Empfänger, aufweisend die folgenden Schritte:

Empfangen (S100) eines Echosignals in einem ersten Kanal und Empfangen eines von einem Sender direkt gesendeten direkten Signals in einer gegebenen Azimutrichtung in einem zweiten Kanal;
Durchführen (S101) einer Range-Kompression des Echosignals über das direkte Signal, und Kompensieren eines Frequenz-Synchronisationsfehlers; und
Extrahieren (102) einer Range-Zeit-Flugbahn gemäß dem Range-komprimierten Echosignal und Kompensieren (S103) eines Zeit-Synchronisationsfehlers gemäß der Range-Zeit-Flugbahn,
wobei der Schritt des Durchführens (S101) einer Range-Kompression des Echosignals über das direkte Signal und des Kompensierens eines Frequenz-Synchronisationsfehlers aufweist:

Transformieren des Echosignals in einen Frequenzbereich durch eine schnelle Fourier-Transformation, FFT, und Transformieren des direkten Signals in den Frequenzbereich durch die FFT;
Durchführen einer konjugierten Multiplikation des FFT-transformierten Echosignals und des FFT-transformierten direkten Signals, um ein Produkt zu gewinnen; und
Rücktransformieren des Produkts in einen Zeitbereich durch eine inverse FFT, IFFT, um die Range-Kompression des Echosignals durchzuführen und den Frequenzsynchronisationsfehler zu kompensieren,

**dadurch gekennzeichnet, dass** der Schritt des Kompensierens (S103) eines Zeitsynchronisationsfehlers gemäß einer Range-Zeit-Flugbahn aufweist:

Durchführen einer polynomialen Anpassung auf der Range-Zeit Flugbahn;
Bestimmen einer groben Schätzung des Zeit-Synchronisationsfehlers durch eine iterative Suche gemäß einem angepassten-Range-Zeit-Polynom und einem theoretischen Range-Zeit-Polynom;
Suchen eines Sollbereichs konzentriert auf die grobe Schätzung für einen Zeitsynchronisationsfehler, der eine Entropie eines fokussierten Bildes minimiert, und Annehmen des Zeit-Synchronisationsfehlers, der die Entropie des fokussierten Bildes minimiert, als genaue Schätzung des Zeitsynchronisationsfehlers; und Kompensieren des Zeit-Synchronisationsfehlers gemäß dem Echosignal und der genauen Schätzung; und das Kompensieren des Zeit-Synchronisationsfehlers gemäß dem Echosignal und der genauen Schätzung aufweist:

Transformieren des Echosignals in einen Range-Frequenz-Bereich durch eine FFT;
Berechnen eines Produkts des FFT-transformierten Echosignals durch eine Kompensationsfunktion der genauen Schätzung; und
Transformieren des Produkts in einen Zeitbereich durch eine IFFT, um den Zeit-Synchronisationsfehler zu kompensieren.

2. Verfahren nach Anspruch 1, wobei der Schritt des Extrahierens (S102) einer Range-Zeit-Flugbahn gemäß dem Range-komprimierten Echosignal aufweist:

Erfassen eines Punkts starker Streuung im Range-komprimierten Echosignal mit einer Vorrichtung zum Detektieren einer konstanten Falschalarmrate, CFAR, im Range-komprimierten Echosignal und Extrahieren der Range-Zeit-Flugbahn mit einer Linienverfolgungsvorrichtung.

3. Bewegtes Empfangsgerät in einem System eines bistatischen Radars mit synthetischer Apertur, SAR, aufweisend ein Empfangsmodul (801), ein Frequenz-Synchronisationsfehlerkompensationsmodul (802), ein Extraktionsmodul (803) und ein Zeit-Synchronisationsfehlerkompensationsmodul (804), wobei
das Empfangsmodul (801) konfiguriert ist, um ein Echosignal in einem ersten Kanal zu empfangen und in einer gegebenen Azimutrichtung in einem zweiten Kanal ein von einem Sender direkt gesendetes direktes Signal zu empfangen;
das Frequenzsynchronisationsfehler (802)-Kompensationsmodul konfiguriert ist, um eine Range-Kompression des Echosignals über das direkte Signal durchzuführen und einen Frequenz-Synchronisationsfehler zu kompensieren;
das Extraktionsmodul (803) konfiguriert ist, um eine Range-Zeit-Flugbahn gemäß dem Range-komprimierten Echosignal zu extrahieren; und
das Zeit-Synchronisationsfehlerkompensationsmodul (804) konfiguriert ist, um einen Zeit-Synchronisationsfehler gemäß der Range-Zeit-Flugbahn zu kompensieren,
wobei das Frequenz-Synchronisationsfehlerkompensationsmodul (802) konfiguriert ist, um:

das Echosignal durch eine schnelle Fourier-Transformation, FFT, in einen Frequenzbereich zu transformieren;
das direkte Signal durch die FFT in den Frequenzbereich zu transformieren;
eine konjugierte Multiplikation des FFT-transformierten Echosignals und des FFT-transformierten direkten Signals durchzuführen, um ein Produkt zu erhalten; und
das Produkt durch eine inverse FFT, IFFT, in einen Zeitbereich rückzutransformieren, um die Range-Kompression des Echosignals durchzuführen und den Frequenz-Synchronisationsfehler zu kompensieren,

dadurch gekennzeichnet, dass das Zeit-Synchronisationsfehler-kompensationsmodul (804) konfiguriert ist, um:

eine polynomiale Anpassung auf der Range-Zeit-Flugbahn durchzuführen;
eine grobe Schätzung des Zeitsynchronisationsfehlers durch eine iterative Suche gemäß einem angepassten Range-Time-Polynom und einem theoretischen Range-Zeit-Polynom zu bestimmen;
einen Sollbereich konzentriert auf die grobe Schätzung für einen Zeit-Synchronisationsfehler, der eine Entropie eines fokussierten Bildes minimiert, zu suchen und den Zeit-Synchronisationsfehler, der die Entropie des fokussierten Bildes minimiert, als eine genaue Schätzung des Zeitsynchronisationsfehlers zu behandeln; und
den Zeitsynchronisationsfehler gemäß dem Echosignal und der genauen Schätzung zu kompensieren, und
das Zeit-Synchronisationsfehlerkompensationsmodul (804) konfiguriert ist, um:

das Echosignal durch eine FFT in einen Range-Frequenzbereich zu transformieren;
im Range-Frequenzbereich ein Produkt des FFT-transformierten Echosignals durch eine Kompensationsfunktion der genauen Schätzung zu berechnen; und
das Produkt durch eine IFFT in einen Zeitbereich zu transformieren, um den Zeitsynchronisationsfehler zu kompensieren.

4. Gerät nach Anspruch 3, wobei das Extraktionsmodul (803) konfiguriert ist, um:

einen Punkt starker Streuung im Range-komprimierten Echosignal mit einer Vorrichtung zum Detektieren einer konstanten Falschalarmrate, CFAR, zu erfassen; und

Extrahieren der Range-Zeit-Flugbahn mit einer Linienverfolgungsvorrichtung.

**5.** System eines bistatischen Radars mit synthetischer Apertur, SAR, aufweisend ein feststehendes Sendegerät (901) und ein bewegtes Empfangsgerät (902) nach einem der Ansprüche 3 und 4, wobei

das Sendegerät (901) konfiguriert ist, um ein Signal zu einem Zielbereich zu senden und ein direktes Signal zum Empfangsgerät zu senden.

**Revendications**

**1.** Procédé de compensation d'une erreur de synchronisation dans un radar à ouverture synthétique bistatique, SAR, système à transmetteur fixe et récepteur mobile, comprenant les étapes de :

réception (S100) d'un signal échographique dans un premier canal de réception, dans un sens azimutal prédéfini dans un second canal, d'un signal direct envoyé directement par un transmetteur ;

réalisation (S101) d'une compression de plage du signal échographique via le signal direct, et compensation d'une erreur de synchronisation de fréquence ; et

extraction (S102) d'une trajectoire de temps de plage en fonction du signal échographique à plage compressée, et compensation (S103) d'une erreur de synchronisation de temps en fonction de la trajectoire de temps de plage, l'étape de réalisation (S101) de la compression de plage du signal échographique via le signal direct et de compensation d'une erreur de synchronisation de fréquence comprenant :

la transformation du signal échographique en un domaine de fréquence par une transformation de Fourier rapide, FFT, et la transformation du signal direct en domaine de fréquence par la FFT ;

la réalisation d'une multiplication conjuguée du signal échographique transformé par FFT et du signal direct transformé par FFT pour obtenir un produit ; et la retransformation du produit en un domaine de temps par une FFT inverse, IFFT pour réaliser la compression de plage du signal échographique et compenser l'erreur de synchronisation de fréquence,

**caractérisé en ce que** l'étape de compensation (S103) d'une erreur de synchronisation de temps en fonction de la trajectoire de temps de plage comprend :

la réalisation d'un réglage polynomial sur la trajectoire de temps de plage ;

la détermination d'une estimation grossière de l'erreur de synchronisation de temps par une recherche itérative en fonction d'un polynôme de temps de plage défini et d'un polynôme de temps de plage théorique ;

la recherche d'une plage définie en se concentrant sur l'estimation grossière pour une erreur de synchronisation de temps minimisant une entropie d'une image focalisée et en retenant l'erreur de synchronisation de temps minimisant l'entropie de l'image focalisée en tant qu'estimation précise de l'erreur de synchronisation de temps ; et

la compensation de l'erreur de synchronisation de temps en fonction du signal échographique et de l'estimation précise, et

la compensation de l'erreur de synchronisation de temps en fonction du signal échographique, l'estimation précise comprenant :

la transformation du signal échographique en un domaine de fréquence de plage par une FFT ;

le calcul d'un produit du signal échographique transformé par FFT par une fonction de compensation de l'estimation précise ; et

la transformation du produit en un domaine de temps par une IFFT pour compenser l'erreur de synchronisation de temps.

**2.** Procédé selon la revendication 1, dans lequel l'étape d'extraction (S102) d'une trajectoire de temps de plage en fonction du signal échographique à plage compressée comprend :

la détection, à l'aide d'un détecteur de taux constant de fausse alarme, CFAR, d'un point de forte dispersion dans le signal échographique à plage compressée et l'extraction, à l'aide d'un suiveur de ligne, de la trajectoire de temps de plage.

**3.** Dispositif récepteur mobile dans un Système de radar à ouverture synthétique bistatique, SAR, comprenant un module récepteur (801), un module de compensation d'erreur de synchronisation de fréquence (802), un module d'extraction (803),et un module de compensation d'erreur de synchronisation de temps (804), dans lequel le module récepteur (801) est conçu pour recevoir un signal échographique dans un premier canal et pour recevoir, dans un sens azimutal prédéfini dans un second canal, un signal direct envoyé directement par un transmetteur ; le module de compensation d'erreur de synchronisation de fréquence (802) est conçu pour réaliser une compression de plage du signal échographique via le signal direct et compenser une erreur de synchronisation de fréquence ; le module d'extraction (803) est conçu pour extraire une trajectoire de temps de plage en fonction du signal échographique à plage compressée ; et le module de compensation d'erreur de synchronisation de temps (804) est conçu pour compenser une erreur de synchronisation de temps en fonction de la trajectoire de temps de plage, dans lequel le module de compensation d'erreur de synchronisation de fréquence (802) est conçu pour :

transformer le signal échographique en un domaine de fréquence de plage par une transformation de Fourier rapide, FFT ;
transformer le signal échographique en un domaine de fréquence de plage par la FFT ;
réaliser une multiplication conjuguée du signal échographique transformé par FFT et du signal direct transformé par FFT pour obtenir un produit ; et
retransformer le produit en un domaine de temps par une FFT inverse, IFFT, pour réaliser la compression de plage du signal échographique et compenser l'erreur de synchronisation de fréquence,

**caractérisé en ce que** le module de compensation d'erreur de synchronisation de fréquence (804) est conçu pour :

réaliser un réglage polynomial sur la trajectoire de temps de plage ;
déterminer une estimation grossière de l'erreur de synchronisation de temps par une recherche itérative en fonction d'un polynôme de temps de plage défini et d'un polynôme de temps de plage théorique ;
rechercher une plage définie en se concentrant sur l'estimation grossière pour une erreur de synchronisation de temps minimisant une entropie d'une image focalisée et retenir l'erreur de synchronisation de temps minimisant l'entropie de l'image focalisée en tant qu'estimation précise de l'erreur de synchronisation de temps ; et
compenser l'erreur de synchronisation de temps en fonction du signal échographique et de l'estimation précise, et

le module de compensation d'erreur de synchronisation de temps (804) est conçu pour :

transformer le signal échographique en un domaine de fréquence de plage par une FFT ;
calculer, sur le domaine de fréquence de plage, un produit du signal échographique transformé par FFT par une fonction de compensation de l'estimation précise ; et
transformer le produit en un domaine de temps par une IFFT pour compenser l'erreur de synchronisation de temps.

**4.** Dispositif selon la revendication 3, dans lequel le module d'extraction (803) est conçu pour :

détecter un point de forte dispersion dans le signal échographique à plage compressée avec un détecteur de taux constant de fausse alarme (CFAR) ; et
extraire la trajectoire de temps de plage à l'aide d'un suiveur de ligne.

**5.** Système de radar à ouverture synthétique bistatique (SAR), comprenant un dispositif transmetteur fixe (901) et un dispositif récepteur mobile (902) selon l'une quelconque des revendications 3 et 4, dans lequel le dispositif transmetteur (901) est conçu pour transmettre un signal vers une zone cible et transmettre un signal direct vers le dispositif récepteur.

Fig. 1

an echo signal is received in a first channel, and a direct signal directly sent by a transmitter is received in a preset azimuthal direction in a second channel     S100

↓

the echo signal is range-compressed via the direct signal, and a frequency synchronization error is compensated     S101

↓

a range-time trajectory is extracted according to the range-compressed echo signal     S102

↓

a time synchronization error is compensated according to the range-time trajectory     S103

EP 2 746 804 B1

Fig. 2

Fig. 3

17

Fig. 4

Fig. 5

Fig. 6a

Fig. 6b

Fig. 7a

Fig. 7b

Fig. 8

Fig. 9

Bistatic SAR system

— 901                                    — 902

| transmitter device | | receiver device |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QILEI ZHANG et al.** An integrative synchronization and imaging approach for bistatic spaceborne/stratospheric SAR with a fixed receiver. *EURASIP Journal on Advances in Signal Processing,* 01 November 2013, vol. 2013 (65), 1-16

- **MING SUI et al.** Time synchronization based on the direct signal for spaceborne/airborne hybrid bistatic SAR. *2013 IEEE Radar Conference,* 29 April 2013, 1-4